# EUROPEAN PATENT SPECIFICATION

(11) **EP 3 254 154 B1**
(45) Date of publication and mention of the grant of the patent: **06.05.2020**
(21) Application number: 16747249.7
(22) Date of filing: 03.02.2016
(51) Int. Cl.: G02F 1/01, G02F 1/19, G02B 5/00, B82Y 20/00

(54) **OPTICAL MODULATING DEVICE HAVING GATE STRUCTURE**
OPTISCHE MODULATIONSVORRICHTUNG MIT GATE-STRUKTUR
DISPOSITIF DE MODULATION OPTIQUE AYANT UNE STRUCTURE DE GRILLE

(30) Priority: 03.02.2015 US 201562111583 P; 29.07.2015 KR 20150107515; 29.01.2016 US 201615010967
(43) Date of publication of application: 13.12.2017
(73) Proprietor: Samsung Electronics Co., Ltd., Suwon-si, Gyeonggi-do 16677 (KR); California Institute of Technology, Pasadena, CA 91125 (US)
(72) Inventor: HAN, Seunghoon, Suwon-si Gyeonggi-do 16678 (KR); HUANG, Yao-wei, Pasadena, CA 91125 (US); ATWATER, Harry A., Pasadena, CA 91125 (US); LEE, Ho Wai, Pasadena, CA 91125 (US); SOHKOYAN, Ruzan, Pasadena, CA 91125 (US); PAPADAKIS, Georgia, Pasadena, CA 91125 (US); THYAGARAJAN, Krishnan, Pasadena, CA 91125 (US)
(74) Representative: Elkington and Fife LLP
(86) International application number: PCT/US2016/016475
(87) International publication number: WO 2016/126896

(56) References cited:
- WO-A1-2014/126789
- WO-A2-2015/187221
- US-A1- 2011 103 742
- US-A1- 2014 085 693
- US-A1- 2014 158 198
- US-A1- 2014 185 122
- US-A1- 2014 185 122
- YUE LI ET AL: "-near-zero metastructures", PHYSICAL REVIEW. B, vol. 90, no. 20, 1 November 2014 (2014-11-01), page 40, XP055499123, US ISSN: 1098-0121, DOI: 10.1103/PhysRevB.90.201107
- VIKTORIIA E. BABICHEVA ET AL: "Plasmonic modulator optimized by patterning of active layer and tuning permittivity", OPTICS COMMUNICATIONS, vol. 285, no. 24, 1 November 2012 (2012-11-01), pages 5500-5507, XP55498810, AMSTERDAM, NL ISSN: 0030-4018, DOI: 10.1016/j.optcom.2012.07.117
- SHI KAIFENG ET AL: "Optical modulators and beam steering based on electrically tunable plasmonic material", JOURNAL OF NANOPHOTONICS, SOCIETY OF PHOTO-OPTICAL INSTRUMENTATION ENGINEERS, 1000 20TH ST. BELLINGHAM WA 98225-6705 USA, vol. 9, no. 1, 1 January 2015 (2015-01-01) , page 93793, XP060053807, DOI: 10.1117/1.JNP.9.093793 [retrieved on 2015-01-20]
- FEI YI ET AL: "Voltage tuning of plasmonic absorbers by indium tin oxide", APPLIED PHYSICS LETTERS, vol. 102, no. 22, 3 June 2013 (2013-06-03) , page 221102, XP55498914, US ISSN: 0003-6951, DOI: 10.1063/1.4809516

## Description

### Technical Field

Apparatuses consistent with exemplary embodiments relate to optical devices that modulate light.

### Background Art

Optical devices that change the transmittance, reflection, polarization, phase, intensity, path, etc. of incident light are utilized in various optical apparatuses. Optical modulators used in optical systems have various structures for controlling these properties in a desired way.

As an example, anisotropic liquid crystals and microelectromechanical system (MEMS) structures, utilizing micromechanical movements to block light or control reflection elements, as well as other elements, are widely used in typical optical modulators. However, operating response times of such optical modulators are slow and may reach more than several µs according to known methods of driving optical modulators.

It is desired to utilize nano antenna that utilize the surface plasma resonance phenomenon, which occurs at a boundary between a metal layer and a dielectric layer, in conjunction with optical modulators as disclosed in US 2014 185122.

### Disclosure of Invention

### Solution to Problem

One or more exemplary embodiments may provide an optical device that modulates light.

Additional exemplary aspects will be set forth in part in the description which follows and, in part, will be apparent from the description, or may be learned by practice of the presented exemplary embodiments.

### Advantageous Effects of Invention

The above-described optical modulation device may include the plasmonic nano-antenna layer and the permittivity variation layer and may modulate incident light in any of various shapes by utilizing, as a gate, an area of the permittivity variation layer in which a carrier concentration varies.

The above-described optical modulation device may be manufactured to have a small size and may enable fast driving. Thus, the optical modulation device may be used in any of various optical apparatuses, thereby improving the performance thereof.

### Brief Description of Drawings

These and/or other exemplary aspects and advantages will become apparent and more readily appreciated from the following description of exemplary embodiments, taken in conjunction with the accompanying drawings in which:
FIG. 1 is a schematic perspective view of a structure of an optical modulation device, according to an exemplary embodiment;
FIG. 2 is a detailed perspective view of a unit block of the optical modulation device of FIG. 1;
FIG. 3 is a cross-sectional view of a gate structure formed in a unit block of the optical modulation device of FIG. 1;
FIG. 4 is a graph of a permittivity variation with respect to a carrier concentration formed in an active area of a permittivity variation layer employed in the optical modulation device of FIG. 1;
FIG. 5 is an enlarged graph of a highlighted portion of FIG. 4;
FIG. 6 is a graph of a reflectance with respect to a carrier concentration formed in an active area of a permittivity variation layer employed in the optical modulation device of FIG. 1;
FIG. 7 is a graph of a phase shift with respect to a carrier concentration formed in an active area of a permittivity variation layer employed in the optical modulation device of FIG. 1;
FIG. 8 is a perspective view of a sample structure for a computer simulation in which an optical modulation device is utilized as a dynamic phase grating, according to another exemplary embodiment;
FIG. 9 is a perspective view of detailed values of a unit block of the sample structure of FIG. 8;
FIG. 10 is a graph of an example of a shape of a voltage applied to the sample structure of FIG. 8 and a phase shift of incident light with respect to the voltage shape and a direction of a 1^{st} order diffraction light;
FIG. 11 is a graph of a light intensity with respect to a diffraction angle when a voltage pattern shown in FIG. 10 is applied to the sample structure of FIG. 8;
FIG. 12 is a graph of other examples of shapes of voltages applied to the sample structure of FIG. 8 and a phase shift of incident light with respect to the voltage forms and a direction of a 1st order diffraction light;
FIG. 13 is a graph of a light intensity with respect to a diffraction angle when a voltage pattern shown in FIG. 12 is applied to the sample structure of FIG. 8 ;
FIG. 14 is a graph of other examples of shapes of voltages applied to the sample structure of FIG. 8 and a phase shift of incident light with respect to the voltage shapes and a direction of a 1st order diffraction light;
FIG. 15 is a graph of a light intensity with respect to a diffraction angle when a voltage pattern shown in FIG. 14 is applied to the sample structure of FIG. 8;
FIG. 16 is a perspective view of a unit block of an optical modulation device, according to another exemplary embodiment;
FIGS. 17A through 17D show exemplary shapes of nano-antennas that may be employed in a unit block of an optical modulation device, according to an exemplary embodiment;
FIG. 18 is a cross-sectional view of a unit block of an optical modulation device, according to another exemplary embodiment; and
FIG. 19 is a cross-sectional view of a unit block of an optical modulation device, according to another exemplary embodiment.

### Best Mode for Carrying out the Invention

One or more exemplary embodiments provides an optical device that modulates light.

Additional exemplary aspects will be set forth in part in the description which follows and, in part, will be apparent from the description, or may be learned by practice of the presented exemplary embodiments.

According to an aspect of an exemplary embodiment, an optical modulation device includes a plasmonic nano-antenna layer as defined in claim 1.

The optical modulation device further includes: a signal applying means configured to apply a signal to the permittivity variation layer, thereby causing a change in the permittivity of the permittivity variation layer.

The signal applying means is a power source configured to apply a voltage between the plasmonic nano-antenna layer and the metal layer.

The permittivity variation layer includes an electro-optic material having a permittivity that varies according to an electrical signal applied thereto.

The permittivity variation layer may include a transparent conductive material.

The permittivity variation layer may include a transition metal nitride.

The permittivity variation layer may include an active area having a carrier concentration that varies according to a voltage applied between the plasmonic nano-antenna layer and the metal layer.

The permittivity variation layer may include a heavily doped semiconductor.

The active area of the permittivity variation layer may be adjacent to the dielectric material layer.

A real part of a dielectric constant of the permittivity variation layer may be equal to 0 in a predetermined wavelength band.

The predetermined wavelength band may be different according to the carrier concentration in the active area.

The voltage applied by the power source between the plasmonic nano-antenna layer and the metal layer may be in a range including a voltage value at which a resonance wavelength band of the plasmonic nano-antenna layer and the predetermined wavelength band are identical.

The plasmonic nano-antenna layer includes a plurality of nano-antenna lines spaced apart from each other in a first direction, and each of the plurality of nano-antenna lines includes a plurality of nano-antennas connected to each other in a second direction different from the first direction.

Each of the plurality of nano-antennas may have a crisscross shape in which a nano rod having a length in the first direction and a nano rod having a length in the second direction cross each other.

Each of the plurality of nano-antennas may be one of circular, oval, polygonal, X-shaped, and star-shaped.

The power source is configured to independently apply a voltage between each of the plurality of nano-antenna lines and the metal layer.

Values of voltages applied between the metal layer and each of the plurality of nano-antenna lines may have a predetermined regularity in the first direction.

The permittivity variation layer may be provided on the metal layer and the dielectric material layer is provided on the permittivity variation layer.

The dielectric material layer may be provided on the metal layer and the permittivity variation layer is provided on the dielectric material layer.

The permittivity variation layer may be patterned in a same shape as the plasmonic nano-antenna layer.

The plasmonic nano-antenna layer may include a metal material and a nano pattern of a plurality of through holes formed in the metal material.

According to an aspect of an exemplary embodiment, an optical apparatus includes the optical modulation device.

### Mode for the Invention

Exemplary embodiments will now be described more fully with reference to the accompanying drawings. Like reference numerals in the drawings denote like elements, and, in the drawings, the sizes of elements may be exaggerated for clarity and for convenience of explanation. In this regard, the exemplary embodiments may have different forms and should not be construed as being limited to the descriptions set forth herein. It will be understood that when a layer is referred to as being "on" another layer or substrate, it can be directly on the other layer or substrate, or intervening layers may also be present. Expressions such as "at least one of" when preceding a list of elements, modify the entire list of elements and do not modify the individual elements of the list.

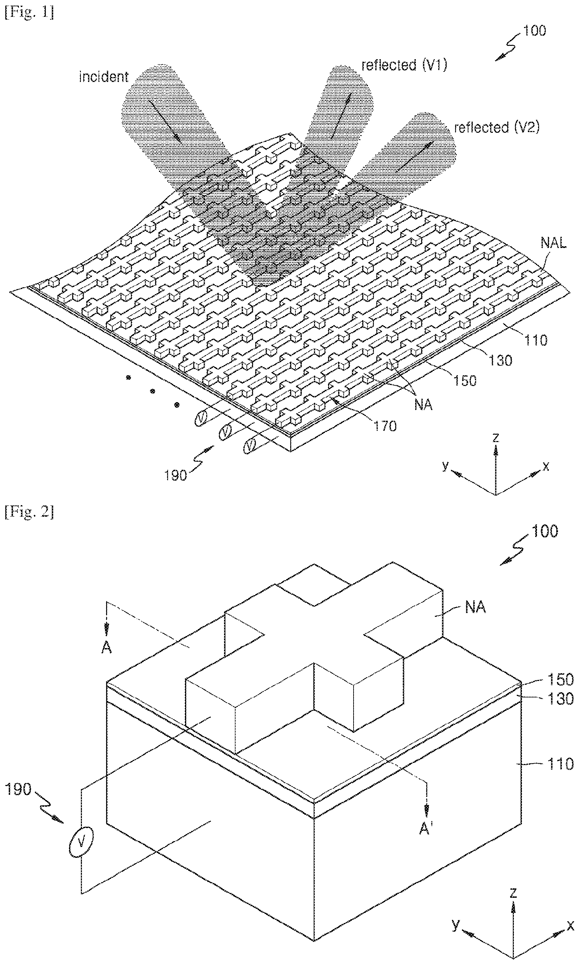

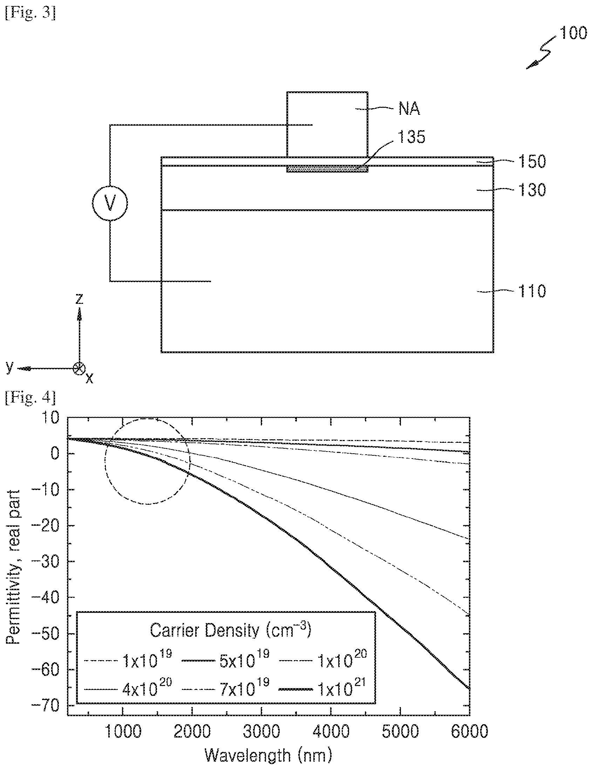

FIG. 1 is a schematic perspective view of a structure of an optical modulation device 100, according to an exemplary embodiment. FIG. 2 is a detailed perspective view of a unit block of the optical modulation device 100 of FIG. 1. FIG. 3 is a cross-sectional view of a gate structure formed in a unit block of the optical modulation device 100 of FIG. 1.

Referring to FIGS. 1 through 3, the optical modulation device 100 may include a plasmonic nano-antenna layer 170 and a metal layer 110 that faces the plasmonic nano-antenna layer 170. A permittivity variation layer 130 is disposed between the plasmonic nano-antenna layer 170 and the metal layer 110 and has a permittivity that varies according to an external signal. A dielectric material layer 150 is disposed between the plasmonic nano-antenna layer 170 and the metal layer 110.

To vary the permittivity of the permittivity variation layer 130, the optical modulation device 100 may further include a signal applying means that applies an external signal to the permittivity variation layer 130. The signal applying means may be, for example, a voltage source 190 that applies a voltage between the plasmonic nano-antenna layer 170 and the metal layer 110 in order to form an electric field in the permittivity variation layer 130 but the signal applying means is not limited thereto.

Although the permittivity variation layer 130 and the dielectric material layer 150 are sequentially provided on the metal layer 110 in FIGS. 1 through 3, the layout order of the permittivity variation layer 130 and the dielectric material layer 150 may be switched.

The plasmonic nano-antenna layer 170 may include a plurality of nano-antennas NA formed of conductive materials. The nano-antennas NA are artificial structures, each having shapes with dimensions of a sub-wavelength. The nano-antennas NA act to strongly collect light in a predetermined wavelength band. In this regard, the term "sub-wavelength" means a dimension smaller than an operating wavelength of the nano-antennas NA, i.e., the predetermined wavelength band. The dimensions of the shapes of the nano-antennas N A, which are sub-wavelength are for example, at least one of a thickness, a width, and a height of the nano-antennas NA, and a spacing between the nano-antennas NA.

A function of nano-antennas NA is performed by surface plasmon resonance that occurs at a boundary between a metal material and a permittivity material. A resonance wavelength varies according to a detailed shape of the nano-antennas NA.

As shown, the plasmonic nano-antenna layer 170 may include a plurality of nano-antenna lines NAL spaced apart from each other in a first direction, for example, a y direction, as shown in FIG. 1. Each of the plurality of nano-antenna lines NAL may include a plurality of nano-antennas NA connected to each other in a second direction, for example, an x direction, as shown in FIG. 1. The first direction and the second direction are orthogonal to each other in FIGS. 1 through 3 but are not limited thereto. The first direction and the second direction may be any directions that are not parallel to each other.

Metal materials having a high conductivity in which surface plasmon excitation may occur may be employed as the conductive material forming the nano-antennas NA. For example, at least one selected from Cu, Al, Ni, Fe, Co, Zn, Ti, ruthenium (Ru), rhodium (Rh), palladium (Pd), platinum (Pt), silver (Ag), osmium (Os), iridium (Ir), and gold (Au) may be employed, and an alloy including one of these metals may be employed. A secondary material having good conductivity such as graphene or a conductive oxide may also be used.

The permittivity variation layer 130 may be formed of a material having an optical characteristic that varies according to the external signal. The external signal may be an electrical signal. The permittivity variation layer 130 may be formed of, for example, a transparent conductive oxide (TCO) such as ITO (indium tin oxide), IZO (indium zinc oxide), AZO (aluminum zinc oxide), or GZO (gallium zinc oxide), or some combination thereof. A transition metal nitride such as TiN, ZrN, HfN, and TaN may be used. In addition, an electro-optic material having an effective permittivity that varies if an electric signal is applied, e.g., LiNbO₃, LiTaO₃, KTN (potassium tantalite niobate), and PZT (lead zirconate titanate) may be used. Various polymer materials having electro-optic characteristics may be used. Any heavily doped semiconductor with doping 10¹³/cm³ ∼ 10¹⁵/cm³ may also be used for permittivity variation layer at infrared wavelengths. Si, InGaAs, InAs, InSb, Ge, InGaSb, GaSb are some examples.

The external signal is not be limited to an electrical signal. A material having a permittivity that varies due to an occurrence of a phase transition at a predetermined temperature or higher if heat is applied, for example, VO₂, VO₂O₃, EuO, MnO, CoO, CoO₂, LiCoO₂, or Ca₂RuO₄ may be employed as the permittivity variation layer 130.

The metal layer 110 may apply a voltage between the metal layer 110 and the plasmonic nano-antenna layer 170 and function as a mirror layer which reflects light. A material of the metal layer 110 may include at least one selected from a variety of metal materials that may perform such a function, for example, Cu, Al, Ni, Fe, Co, Zn, Ti, ruthenium (Ru), rhodium (Rh), palladium (Pd), platinum (Pt), silver (Ag), osmium (Os), iridium (Ir), and gold (Au).

The voltage applying means 110 may be configured to independently apply voltages between the metal layer 110 and each of the plurality of nano-antenna lines NAL.

Referring to FIG. 3, the permittivity variation layer 130 may include an active area 135 having a carrier concentration that varies according to whether a voltage is applied between the metal layer 110 and the plasmonic nano-antenna layer 170. The active area 135 may be formed in an area of the permittivity variation layer 130 adjacent to the dielectric material layer 150 and have the carrier concentration that varies according to the applied voltage. A type or degree of light modulation of light incident onto the optical modulation device 100 is changed based on the carrier concentration in the active area 135. In this regard, the active area 135 may be a gate that adjusts and controls a light modulation performance of the nano-antennas NA.

As described above, the nano-antennas NA may strongly collect light of a specific wavelength band according to the dimensions of the shape thereof. The optical modulation device 100 may include the nano-antennas NA and the metal layer 110 that acts as a mirror. Due to the metal layer 110 and the nano-antennas NA, a magnetic resonance mode is formed so that an epsilon near zero (ENZ) characteristic of the active area 135 is formed, and thus reflection and diffraction of light of a specific wavelength band, from among the incident light, may be adjusted. In this regard, according to whether a voltage is applied between the metal layer 110 and the nano-antennas NA, the carrier concentration of the active area 135 may vary, and thus, the reflection and diffraction of the incident light may vary.

The permittivity of the permittivity variation layer 130 may be different for different wavelengths. A relative permittivity εr with respect to a permittivity of vacuum, ε0 is defined as a dielectric constant. A real part of the dielectric constant of the permittivity variation layer 130 is equal to 0 in a predetermined wavelength band. A wavelength band in which the real part of the dielectric constant is equal to or approximately equal 0 is referred to as an ENZ wavelength band. A dielectric constant of most materials may be a function of a wavelength and be indicated as a complex number. The dielectric constant of a vacuum is 1 and the real part of the dielectric constant of a dielectric material is a positive number greater than 1, typically. In the case of metal, the real part of the dielectric constant may be a negative number. The dielectric constant of most materials has a value greater than 1 in most wavelength bands, whereas the real part of the dielectric constant may be equal to 0 in a specific wavelength.

When the real part of the dielectric constant is equal or approximately equal to 0, the dielectric material exhibits a peculiar optical property. The optical modulation device 100 of the current embodiment sets an operating wavelength band as an area including the ENZ wavelength area of the permittivity variation layer 130. That is, the resonance wavelength band of the nano-antennas NA and the ENZ wavelength band of the permittivity variation layer 130 may be set to be similar to each other, thereby further increasing a range of the optical modulation performance that may be adjusted according to the applied voltage.

The ENZ wavelength area of the permittivity variation layer 130 varies according to the carrier concentration formed in the active area 135. To utilize the ENZ wavelength band of the permittivity variation layer 130, a voltage applied by the voltage applying means 190 between the metal layer 110 and the plasmonic nano-antenna layer 170 may be in a range including a voltage value in which the resonance wavelength of the plasmonic nano-antenna layer 170 and a wavelength indicating the ENZ property of the permittivity variation layer 130 are identical to each other.

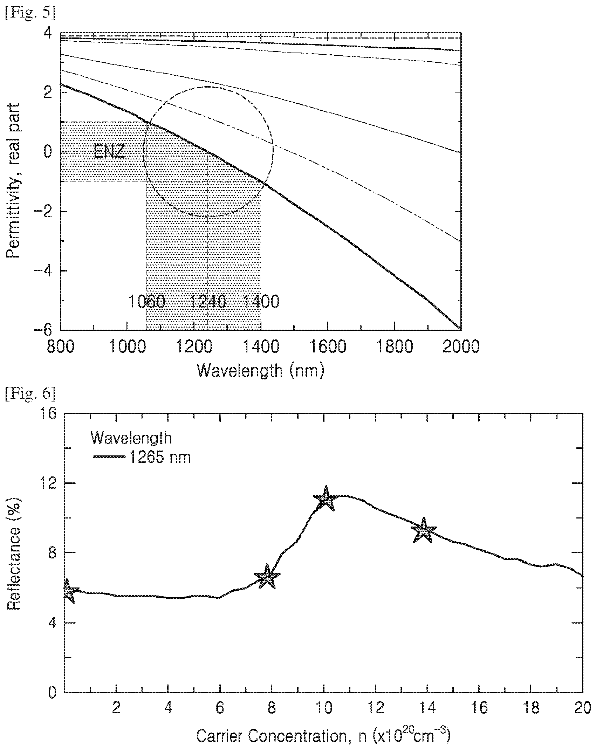

FIG. 4 is a graph of a permittivity variation with respect to a carrier concentration formed in the active area 135 of the permittivity variation layer 130 employed in the optical modulation device 100 of FIG. 1. FIG. 5 is an enlarged graph of a circular part of FIG. 4.

The horizontal axes of the graphs denote a wavelength, and the vertical axes denote a real part of a relative permittivity εr, i.e. a dielectric constant.

Referring to the graphs, the curve of the change of the dielectric constant with respect to wavelength varies according to the carrier concentration. For example, when the carrier concentration is 1x10²¹cm⁻³, an ENZ wavelength band in which the real part of the dielectric constant has a value between 1 and -1 is a range between about 1060 nm and about 1400 nm. If the carrier concentration is lower than 1x10²¹cm⁻³, the ENZ wavelength band tends to slightly move to a long wavelength band.

The carrier concentration formed in the active area 135 of the permittivity variation layer 130 may be determined according to an applied voltage, and thus in consideration of the graphs and a resonance wavelength band of the nano-antennas NA, a range of voltage that is to be applied to the optical modulation device 100 may be set in accordance with a desired optical modulation range.

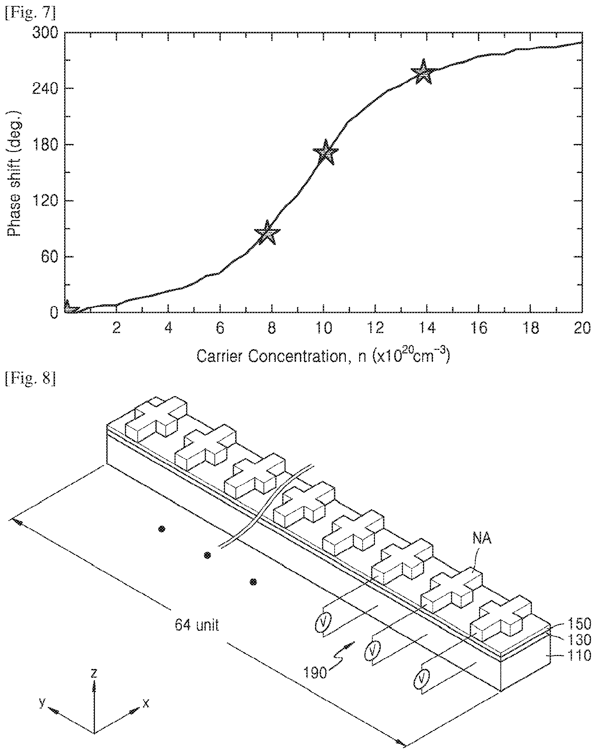

FIG. 6 is a graph of reflectance with respect to a carrier concentration formed in the active area 135 of the permittivity variation layer 130 employed in the optical modulation device 100 of FIG. 1. FIG. 7 is a graph of a phase shift with respect to a carrier concentration formed in the active area 135 of the permittivity variation layer 130 employed in the optical modulation device 100 of FIG. 1.

According to FIG. 6, the optical modulation device 100 is capable of a 4-level phase shift with respect to light of a wavelength of 1265 nm. That is, when light of a wavelength of 1264 nm is incident onto the optical modulation device 100, a phase shift of 0, 90°, 180°, and 270° may occur by changing the carrier concentration, i.e. changing voltage applied between the metal layer 110 and the nano-antennas NA.

Values of voltages applied between the metal layer 110 and the plurality of nano-antennas NA may have a predetermined regularity, and thus the optical modulation device 100 may function as a phase grating.

The optical modulation device 100 may be utilized as a dynamic phase grating according to an exemplary embodiment described below with reference to FIGS. 8 through 15 below.

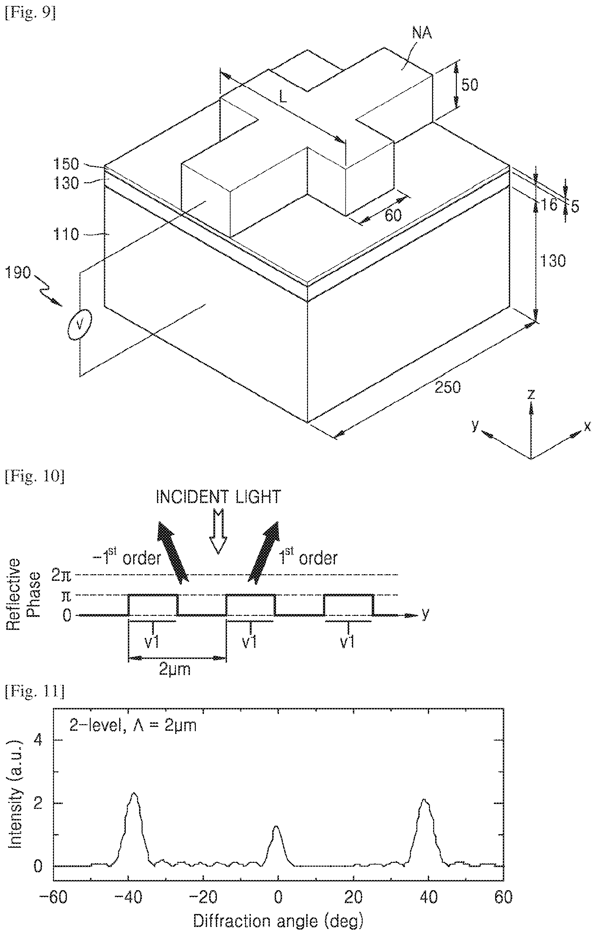

FIG. 8 is a perspective view of a sample structure for a computer simulation in which the optical modulation device 100 is utilized as dynamic phase grating, according to an exemplary embodiment. FIG. 9 is a perspective view of detailed dimensions of a unit block of the sample structure of FIG. 8.

Referring to FIG. 8, the sample structure used for the computer simulation may include 64 unit blocks arranged in a y direction. Dimensions of the unit blocks may be the same as shown in FIG. 9 and have a unit of nm. A boundary condition defining that the unit blocks are repeatedly continuous in an x direction may be applied during the computer simulation. L is equal to 180 nm, that is, a length capable of modulating light of a wavelength of 1250 nm. The operating wavelength of the device may be changed by adjusting L. In the computer simulation, it is given that the metal layer 110 and the nano-antennas NA are made of Au, the permittivity variation layer 130 is made of ITO, and the permittivity dielectric material layer 150 is made of Al₂O₃.

FIG. 10 is a graph of an example of a pattern of a voltage applied to the sample structure of FIG. 8 and a phase shift of incident light with respect to the voltage pattern and a direction of 1^{st} order diffraction light.

The voltage V1 shown in FIG. 10 is applied between the metal layer 110 and the nano-antennas NA at a regular period Λ of 2µm in the sample structure of FIG. 8. That is, the voltage V1 may be applied between the metal layer 110 and each of the nano-antennas NA in four unit blocks in a y direction, and no voltage may be applied between the metal layer 110 and each of the nano-antennas NA in next four unit blocks. Voltages may be applied to 64 unit blocks with this regular period. The voltage V1 may be determined so that the phase shift is π, i.e., 180°.

Since the voltage is regularly applied, an area having the phase shift of 180° and an area having no phase shift are repeated at the same period as the voltage applying period Aof 2µm along the surface of the optical modulation device 100. If light is incident onto such a phase grating, according to the computer simulation results, 1^{st} and -1^{st} order diffraction light corresponding to a shape in which a phase shift from 0° to 180°at the period of 2µm may occur.

FIG. 11 is a graph of light intensity with respect to a diffraction angle when a voltage pattern as shown in FIG. 10 is applied to the sample structure of FIG. 8.

Referring to FIG. 11, an intensity peak appears at the diffraction angles 40° and -40°, due to the symmetry of the phase grating. That is, as is shown in the graph of FIG. 10, 1^{st} order diffraction light and -1^{st} order diffraction light may to a direction of incident light.

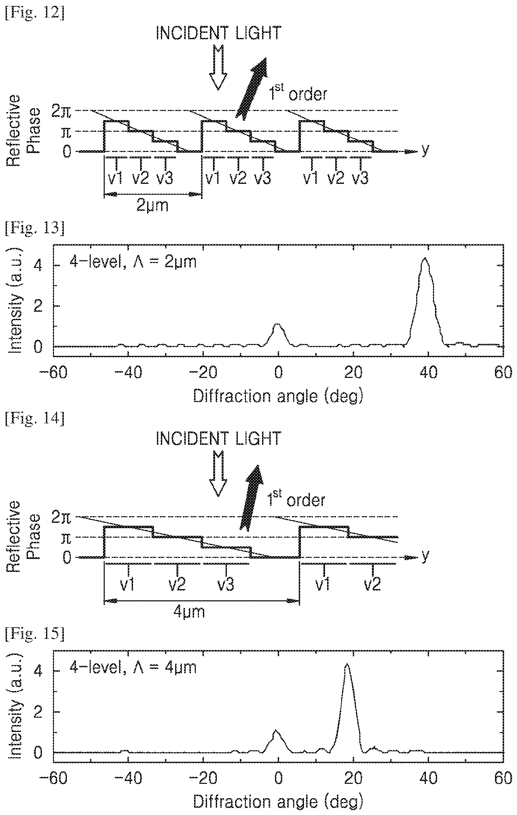

FIG. 12 is a graph of another example of shapes of voltages applied to the sample structure of FIG. 8 and a resultant phase shift of incident light with respect to the voltage shapes and a direction of 1^{st} order diffraction light.

Referring to the graph of FIG. 12, the voltages V1, V2, and V3 may be applied at a regular period so that a phase grating having no symmetry may be formed.

The voltage pattern of V1, V2, V3 of three values that may cause phase shifts of 270°, 180°, and 90°and no voltage application may be applied between the metal layer 110 and the nano-antennas NA at the period A of 2µm. That is, the voltage V1 may be applied between each of the nano-antennas NA and the metal layer 110 in two unit blocks in a y direction, the voltage V2 may be applied between each of the nano-antennas NA and the metal layer 110 in next two unit blocks, the voltage V3 may be applied between each of the nano-antennas NA and the metal layer 110 in next two unit blocks, and no voltage may be applied between each of the nano-antennas NA and the metal layer 110 in next two unit blocks. Such a regular period may be repeatedly applied to 64 unit blocks.

Since voltages are applied at a regular period, an area having the phase shift of 270°, an area having the phase shift of 180°, an area having the phase shift of 90°, and an area having no phase shift are repeated at the same period as the voltage applying period Λ of 2µm along the surface of the optical modulation device 100. If light is incident onto such phase grating, as shown, it is determined that 1^{st} order diffraction light corresponding to a shape in which a phase gradually shifts from 270° to 0° at the period of 2µm may .

FIG. 13 is a graph of light intensity with respect to a diffraction angle when a voltage pattern as shown in FIG. 12 is applied to the sample structure of FIG. 8.

Referring to FIG. 13, when the diffraction angle is 40°, an intensity peak appears. As compared with the graph of FIG. 11, the intensity peak appears at the diffraction angle of 40° and does not appear at a diffraction angle of -40°. The peak value is about 2 times greater than that of FIG. 11. Such a difference is due to the phase gating of FIG. 12 having no symmetry, as compared to the symmetry of the phrase grating of FIG. 10.

FIG. 14 is a graph of another example of shapes of the voltage applied to the sample structure of FIG. 8 and a phase shift of incident light with respect to the voltage shapes and a direction of 1^{st} order diffraction light.

The voltage applying pattern of FIG. 14 has a shape in which the period Λ increase to 4µm, as compared to that of FIG. 12. The voltage pattern of V1, V2, V3 of three values that may cause phase shifts of 270°, 180°, 90° and no voltage application may be applied between the metal layer 110 and the nano-antennas NA at the period Λ of 4µm. That is, the voltage V1 may be applied between each of the nano-antennas NA and the metal layer 110 in four unit blocks in a y direction, the voltage V2 may be applied between each of the nano-antennas NA and the metal layer 110 in next four unit blocks, the voltage V3 may be applied between each of the nano-antennas NA and the metal layer 110 in next four unit blocks, and no voltage may be applied between each of the nano-antennas NA and the metal layer 110 in next four unit blocks. Such a regular period may be repeatedly applied to 64 unit blocks.

Since the voltages are regularly applied, an area having the phase shift of 270°, an area having the phase shift of 180°, an area having the phase shift of 90°, and an area having no phase shift are repeated at the same period as the voltage applying period A of 4µm along the surface of the optical modulation device 100. If light is incident to such a phase grating, as shown, it is determined that a 1^{st} order diffraction light corresponding to a shape in which a phase gradually shifts from 270° to 0°at the period of 4 µm may occur.

FIG. 15 is a graph of light intensity with respect to a diffraction angle when the voltage pattern shown in FIG. 14 is applied to the sample structure of FIG. 8.

As described with reference to FIGS. 8 through 15, the optical modulation device 100 may be used as a phase grating according to the shapes of several applied voltage. According to results above, it may be seen that a phase shift control of 2 π may be possible with respect to light of a near IR wavelength by using ITO to form the permittivity variation layer 130. Thus, light of a different wavelength band may be controlled by utilizing a different material for of permittivity variation layer 130 and/or using nano-antennas NA with shapes having different dimensions.

The applied voltage patterns shown herein are examples. A regular period of the voltage pattern applied may be varied, thereby achieving various light modulation results. A phase shift may have various levels including 2 or 4. This may be used to perform light modulation functions such as beam shaping or beam steering.

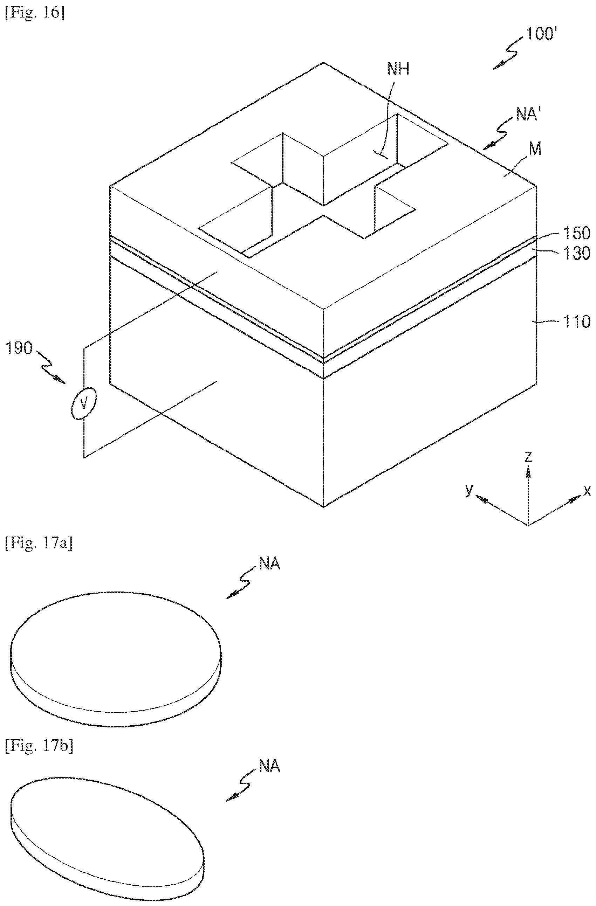

FIG. 16 is a perspective view of a unit block of an optical modulation device 100', according to another exemplary embodiment.

The optical modulation device 100' may include the metal layer 110, the permittivity variation layer 130, and a nano-antenna NA'. The nano-antenna NA' may have a shape including a nano pattern engraved in a metal material M, unlike the embossed shape of the nano-anntena NA of FIG. 2. That is, the nano-antenna NA' may have a shape that is the inverse of the shape of the nano-anntena NA of FIG. 2. A substantially cross-shaped through hole NH may be engraved in the metal material M.

Although the cross-sectional shapes of the nano-antennas NA and NA' are illustrated as being substantially cross-shaped, this is merely exemplary. The nano-antennas NA and NA' may have any of various shapes.

FIGS. 17A through 17D show exemplary shapes of nano-antennas that may be used in a unit block of an optical modulation device, according to exemplary embodiments.

Referring to FIG. 17A, a cross-sectional shape of the nano-antenna NA may be circular. A nano-antenna NA with such a shape may be used in the optical modulation device 100 of FIG. 1. A plurality of circular nano-antennas NA may be arranged to be connected to each other in one direction to form a nano-antenna line NAL.

Referring to FIG. 17B, a cross-sectional shape of the nano-antenna NA may be oval. A nano-antenna NA with such a shape may be used in the optical modulation device 100 of FIG. 1. A plurality of oval nano-antennas NA may be arranged to be connected to each other in one direction, for example, along a major axis, to form a nano-antenna line NAL. The plurality of oval nano-antennas NA may be arranged to be connected to each other in a different direction from the major axis, for example, along a minor axis or in another direction, to form the nano-antenna line NAL.

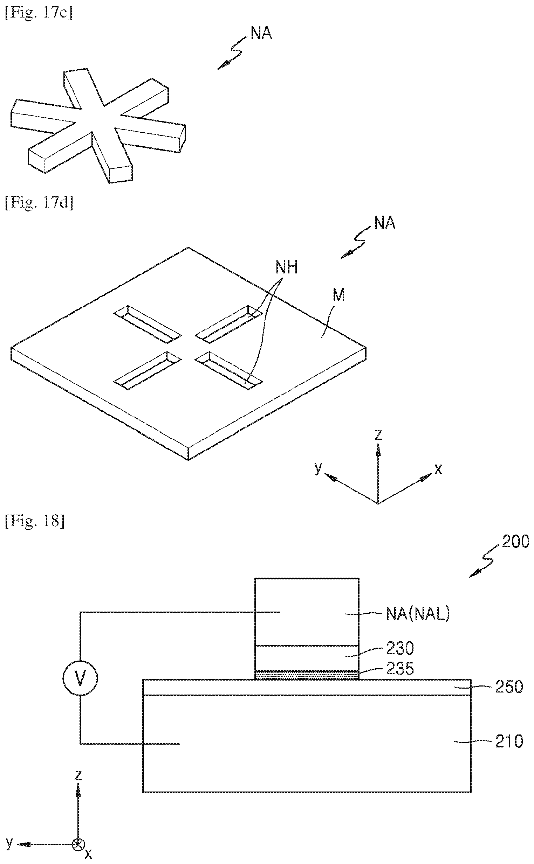

Referring to FIG. 17C, the nano-antenna NA may have a star (*) shape in which three nano rods intersect. A plurality of star shape nano-antennas NA may be connected to each other in one direction, for example, a length direction of one of the three nano rods, to form the nano-antenna line NAL of the optical modulation device 100 of FIG. 1.

The nano-antenna NA of FIG. 17D may have a shape in which a plurality of nano pattern through holes NH are formed in the metal material M. A plurality of such shape of nano-antennas NA may be connected to each other, for example, in an x direction, to form the nano-antenna line NAL of FIG. 1.

The shapes of FIGS. 17A through 17D are exemplary. In addition, the nano-antenna NA may have any of various shapes, for example, polygonal shapes, nano rods, etc..

FIG. 18 is a cross-sectional view of a unit block of an optical modulation device 200, according to another exemplary embodiment.

The optical modulation device 200 may include a metal layer 210, a dielectric material layer 250, a permittivity variation layer 230, and a nano-antenna NA.

The optical modulation device 200 of the present embodiment is different from the optical modulation device 100 of FIG. 2 in the arrangement of the dielectric material layer 250 and the permittivity variation layer 230. That is, the dielectric material layer 250 may be provided on the metal layer 210, the permittivity variation layer 230 may be provided on the dielectric material layer 250, and the nano-antennal NA may be provided on the permittivity variation layer 230. The plurality of nano-antennas NA may be arranged to be connected to each other in an x direction to form the nano-antenna line NAL. The permittivity variation layer 230 may be patterned in the same shape as the nano-antenna NA.

If voltage is applied between the metal layer 210 and the nano-antennal NA, an active area 235 may be formed in the permittivity variation layer 230. The active area 235 may be formed in the region of the permittivity variation layer 230 adjacent to the dielectric material layer 250, may have a carrier concentration that varies according to a change in the applied voltage, and may thereby function as a gate that adjusts and controls optical modulation performance.

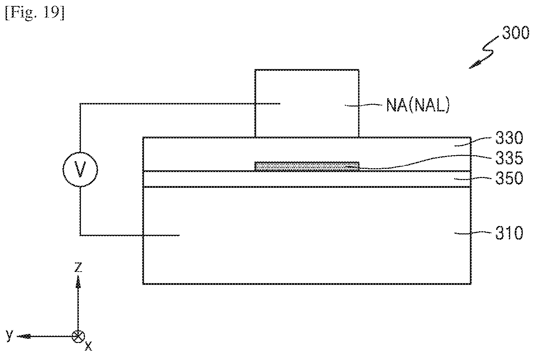

FIG. 19 is a cross-sectional view of a unit block of an optical modulation device 300, according to another exemplary embodiment.

The optical modulation device 300 may include a metal layer 310, a dielectric material layer 350, a permittivity variation layer 330, and a nano-antenna NA.

The optical modulation device 300 of the present exemplary embodiment is different from the optical modulation device 200 of FIG. 18 in that the permittivity variation layer 330 is not patterned in the same shape as the nano-antenna NA. That is, the dielectric material layer 350 and the permittivity variation layer 330 may be formed on an entire surface the metal layer 310, and the nano-antenna NA may be formed in a predetermined pattern on the permittivity variation layer 330. The plurality of nano-antennas NA may be arranged to be connected to each other in an x direction to form the nano-antenna line NAL.

If a voltage is applied between the metal layer 310 and the nano-antennal NA, an active area 335 may be formed in the permittivity variation layer 330. The active area 335 may be formed in a region of the permittivity variation layer 330 adjacent to the dielectric material layer 350, may have a carrier concentration that varies according to a change in the applied voltage, and may thereby function as a gate that adjusts and controls optical modulation performance.

In the above-described optical modulation device, a material of a permittivity variation layer, a shape and/or dimensions of a nano-antenna, and a form of the applied voltage may be changed in any of various ways, thereby providing various optical modulation performances in a desired wavelength band. For example, in the structure of FIG. 1, a plurality of nano-antennas may be arranged in a matrix shape to form a plasmonic nano-antenna layer, and voltage applying means may be configured to individually control the voltage between each of the nano-antennas and a metal layer. The nano-antennas included in the plasmonic nano-antenna layers illustrated herein have the same shape, but this is merely exemplary. Nano-antennas within the same plasmonic nano-antenna layer may have different shapes. Alternatively, nano-antennas in the same plasmonic nano--antenna layer may have the same shape, but different dimensions, so that a resonance wavelength band may be differently in each area.

The above-described optical modulation device may include the plasmonic nano-antenna layer and the permittivity variation layer and may modulate incident light in any of various shapes by utilizing, as a gate, an area of the permittivity variation layer in which a carrier concentration varies.

The above-described optical modulation device may be manufactured to have a small size and may enable fast driving. Thus, the optical modulation device may be used in any of various optical apparatuses, thereby improving the performance thereof.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

## Claims

1. An optical modulation device (100) comprising:
a plasmonic nano-antenna layer (170);
a metal layer (110);
a permittivity variation layer (130) comprising an electro-optic material disposed between the plasmonic nano-antenna layer and the metal layer, the permittivity variation layer having a permittivity that varies according to an electrical signal applied thereto;
a dielectric material layer (150) disposed between the plasmonic nano-antenna layer and the metal layer;
and a signal applying means (190) comprising a power source configured to apply a voltage signal between the plasmonic nano-antenna layer and the metal layer thereby to cause a change in the permittivity of the permittivity variation layer;
**characterized in that** the plasmonic nano-antenna layer comprises a plurality of nano-antenna lines (NAL) spaced apart from each other in a first direction (y), each of the plurality of nano-antenna lines comprising a plurality of nano-antennas (NA) connected to each other in a second direction (x) different from the first direction;
and **in that** the power source is configured to apply independently a voltage signal between each respective one of the plurality of nano-antenna lines and the metal layer.

2. The oprical modulation device of claim 1, wherein values of voltages applied between the metal layer (110) and each of the plurality of nano-antenna lines (NAL) have a predetermined regularity in the first direction (y).

3. The optical modulation device of claim 1 or 2, wherein the permittivity variation layer (130) comprises at least one of: transparent conductive material; and a transition metal nitride.

4. The optical modulation device of any preceding claim, wherein the permittivity variation layer (130) comprises an active area (135) having a carrier concentration that varies according to a voltage applied between the plasmonic nano-antenna layer (170) and the metal layer (110).

5. The oprical modulation device of claim 4, wherein the active area (135) of the permittivity variation layer is adjacent to the dielectric material layer (150).

6. The optical modulation device of claim 4 or 5, wherein the real part of the dielectric constant of the permittivity variation layer (130) is equal to 0 in a predetermined wavelength band.

7. The optical modulation device of claim 6, wherein the predetermined wavelength band is different according to the carrier concentration in the active area (135).

8. The optical modulation device of claim 6 or 7, wherein the voltage applied by the power source between the plasmonic nano-antenna layer (170) and the metal layer (110) is in a range including a voltage value at which a resonance wavelength band of the plasmonic nano-antenna layer and the predetermined wavelength band are identical.

9. The optical modulation device of any preceding claim, wherein each of the plurality of nano-antennas (NA) has a crisscross shape in which a nano rod having a length in the first direction (y) and a nano rod having a length in the second direction (x) cross each other.

10. The optical modulation device of any one of claims 1 to 8, wherein each of the plurality of nano-antennas (NA) is one of: circular, oval, polygonal, X-shaped and star-shaped.

11. The optical modulation device of any preceding claim, wherein the permittivity variation layer (130) is disposed on the metal layer (110) and the dielectric material layer (150) is disposed on the permittivity variation layer.

12. The optical modulation device of any one of claims 1 to 10, wherein the dielectric material layer (150) is disposed on the metal layer (110) and the permittivity variation layer (130) is disposed on the dielectric material layer.

13. The oprical modulation device of claim 12, wherein the permittivity variation layer (150) is patterned in the same shape as the plasmonic nano-antenna layer (170).

14. The optical modulation device of any preceding claim, wherein the plasmonic nano-antenna layer (170) comprises a metal material and a nano pattern of a plurality of through holes formed in the metal material.

15. An optical apparatus comprising the optical modulation device of claim 1.

## Patentansprüche

1. Optische Modulationsvorrichtung (100), umfassend:
eine plasmonische Nanoantennenschicht (170);
eine Metallschicht (110);
eine Permittivitätsvariationsschicht (130), umfassend ein elektrooptisches Material, das zwischen der plasmonischen Nanoantennenschicht und der Metallschicht angeordnet ist, wobei die Permittivitätsvariationsschicht eine Permittivität aufweist, die gemäß einem daran angelegten elektrischen Signal variiert;
eine dielektrische Materialschicht (150), die zwischen der plasmonischen Nanoantennenschicht und der Metallschicht angeordnet ist;
und ein Signalanwendungsmittel (190), umfassend eine Stromquelle, die konfiguriert ist, um ein Spannungssignal zwischen der plasmonischen Nanoantennenschicht und der Metallschicht anzulegen, wobei dadurch eine Änderung der Permittivität der Permittivitätsvariationsschicht verursacht wird;
**dadurch gekennzeichnet, dass** die plasmonische Nanoantennenschicht eine Vielzahl von Nanoantennenleitungen (NAL) umfasst, die in einer ersten Richtung (y) voneinander beabstandet sind, wobei jede der Vielzahl von Nanoantennenleitungen eine in einer zweiten Richtung (x) miteinander verbundene Vielzahl von Nanoantennen (NA) umfasst, die sich von der ersten Richtung unterscheidet;
und dadurch, dass die Stromquelle so konfiguriert ist, dass sie unabhängig ein Spannungssignal zwischen jeder jeweiligen der Vielzahl von Nanoantennenleitungen und der Metallschicht anlegt.

2. Optische Modulationsvorrichtung nach Anspruch 1, wobei Werte von Spannungen, die zwischen der Metallschicht (110) und jeder der Vielzahl von Nanoantennenleitungen (NAL) angelegt werden, eine vorbestimmte Regelmäßigkeit in der ersten Richtung (y) aufweisen.

3. Optische Modulationsvorrichtung nach Anspruch 1 oder 2, wobei die Permittivitätsvariationsschicht (130) umfasst: ein transparentes leitfähiges Material; und/oder ein Übergangsmetallnitrid.

4. Optische Modulationsvorrichtung nach einem der vorhergehenden Ansprüche, wobei die Permittivitätsvariationsschicht (130) einen aktiven Bereich (135) mit einer Trägerkonzentration umfasst, die gemäß einer zwischen der plasmonischen Nanoantennenschicht (170) und der Metallschicht (110) angelegten Spannung variiert.

5. Optische Modulationsvorrichtung nach Anspruch 4, wobei der aktive Bereich (135) der Permittivitätsvariationsschicht der dielektrischen Materialschicht (150) benachbart ist.

6. Optische Modulationsvorrichtung nach Anspruch 4 oder 5, wobei der Realteil der Dielektrizitätskonstante der Permittivitätsvariationsschicht (130) in einem vorbestimmten Wellenlängenband gleich 0 ist.

7. Optische Modulationsvorrichtung nach Anspruch 6, wobei das vorbestimmte Wellenlängenband gemäß der Trägerkonzentration in dem aktiven Bereich (135) unterschiedlich ist.

8. Optische Modulationsvorrichtung nach Anspruch 6 oder 7, wobei die von der Stromquelle zwischen der plasmonischen Nanoantennenschicht (170) und der Metallschicht (110) angelegte Spannung in einem Bereich liegt, der einen Spannungswert enthält, bei dem ein Resonanzwellenlängenband der plasmonischen Nanoantennenschicht und das vorbestimmte Wellenlängenband identisch sind.

9. Optische Modulationsvorrichtung nach einem der vorhergehenden Ansprüche, wobei jede der Vielzahl von Nanoantennen (NA) eine Kreuzform aufweist, bei der sich ein Nanostab mit einer Länge in der ersten Richtung (y) und ein Nanostab mit einer Länge in der zweiten Richtung (x) kreuzen.

10. Optische Modulationsvorrichtung nach einem der Ansprüche 1 bis 8, wobei jede der Vielzahl von Nanoantennen (NA) kreisförmig, oval, polygonal, X-förmig oder sternförmig ist.

11. Optische Modulationsvorrichtung nach einem der vorhergehenden Ansprüche, wobei die Permittivitätsvariationsschicht (130) auf der Metallschicht (110) und die dielektrische Materialschicht (150) auf der Permittivitätsvariationsschicht angeordnet ist.

12. Optische Modulationsvorrichtung nach einem der Ansprüche 1 bis 10, wobei die dielektrische Materialschicht (150) auf der Metallschicht (110) und die Permittivitätsvariationsschicht (130) auf der dielektrischen Materialschicht angeordnet ist.

13. Optische Modulationsvorrichtung nach Anspruch 12, wobei die Permittivitätsvariationsschicht (150) in der gleichen Form wie die plasmonische Nanoantennenschicht (170) strukturiert ist.

14. Optische Modulationsvorrichtung nach einem der vorhergehenden Ansprüche, wobei die plasmonische Nanoantennenschicht (170) ein Metallmaterial und ein Nanomuster aus einer Vielzahl von Durchgangslöchern umfasst, die in dem Metallmaterial ausgebildet sind.

15. Optische Vorrichtung, umfassend die optische Modulationsvorrichtung nach Anspruch 1.

## Revendications

1. Dispositif de modulation optique (100) comprenant :
une couche de nano-antenne plasmonique (170) ;
une couche métallique (110) ;
une couche de variation de permittivité (130) comprenant un matériau électro-optique disposé entre la couche de nano-antenne plasmonique et la couche métallique, la couche de variation de permittivité possédant une permittivité qui varie selon un signal électrique qui lui est appliqué ;
une couche de matériau diélectrique (150) disposée entre la couche de nano-antenne plasmonique et la couche métallique ;
et un moyen d'application de signal (190) comprenant une source d'alimentation conçue pour appliquer un signal de tension entre la couche de nano-antenne plasmonique et la couche métallique pour ainsi entraîner un changement dans la permittivité de la couche de variation de permittivité ;
**caractérisé en ce que** la couche de nano-antenne plasmonique comprend une pluralité de lignes de nano-antennes (NAL) espacées les unes des autres dans une première direction (y), chacune de la pluralité de lignes de nano-antennes comprenant une pluralité de nano-antennes (NA) connectées les unes aux autres dans une seconde direction (x) différente de la première direction ;
et **en ce que** la source d'alimentation est conçue pour appliquer indépendamment un signal de tension entre chaque ligne de nano-antennes respective de la pluralité de lignes de nano-antennes et la couche métallique.

2. Dispositif de modulation optique selon la revendication 1, lesdites valeurs de tensions appliquées entre la couche métallique (110) et chacune de la pluralité de lignes de nano-antennes (NAL) présentant une régularité prédéfinie dans la première direction (y).

3. Dispositif de modulation optique selon la revendication 1 ou 2, ladite couche de variation de permittivité (130) comprenant au moins l'un parmi : un matériau conducteur transparent ; et un nitrure de métal de transition.

4. Dispositif de modulation optique selon l'une quelconque des revendications précédentes, ladite couche de variation de permittivité (130) comprenant une zone active (135) possédant une concentration de porteuses qui varie selon une tension appliquée entre la couche de nano-antenne plasmonique (170) et la couche métallique (110).

5. Dispositif de modulation optique selon la revendication 4, ladite zone active (135) de la couche de variation de permittivité étant adjacente à la couche de matériau diélectrique (150).

6. Dispositif de modulation optique selon la revendication 4 ou 5, ladite partie réelle de la constante diélectrique de la couche de variation de permittivité (130) étant égale à 0 dans une bande de longueurs d'onde prédéfinie.

7. Dispositif de modulation optique selon la revendication 6, ladite bande de longueurs d'onde prédéfinie étant différente selon la concentration de porteuses dans la zone active (135).

8. Dispositif de modulation optique selon la revendication 6 ou 7, ladite tension appliquée par la source d'alimentation entre la couche de nano-antenne plasmonique (170) et la couche métallique (110) étant dans une plage comprenant une valeur de tension à laquelle une bande de longueurs d'onde de résonance de la couche de nano-antenne plasmonique et la bande de longueurs d'onde prédéfinie sont identiques.

9. Dispositif de modulation optique selon l'une quelconque des revendications précédentes, chacune de la pluralité de nano-antennes (NA) possédant une forme entrecroisée dans laquelle une nano tige possédant une longueur dans la première direction (y) et une nano tige possédant une longueur dans la seconde direction (x) se croisent.

10. Dispositif de modulation optique selon l'une quelconque des revendications 1 à 8, chacune de la pluralité de nano-antennes (NA) étant l'une de : circulaire, ovale, polygonale, en forme de X et en forme d'étoile.

11. Dispositif de modulation optique selon l'une quelconque des revendications précédentes, ladite couche de variation de permittivité (130) étant disposée sur la couche métallique (110) et la couche de matériau diélectrique (150) étant disposée sur la couche de variation de permittivité.

12. Dispositif de modulation optique selon l'une quelconque des revendications 1 à 10, ladite couche de matériau diélectrique (150) étant disposée sur la couche métallique (110) et ladite couche de variation de permittivité (130) étant disposée sur la couche de matériau diélectrique.

13. Dispositif de modulation optique selon la revendication 12, ladite couche de variation de permittivité (150) possédant un motif qui présente la même forme que la couche de nano-antenne plasmonique (170).

14. Dispositif de modulation optique selon l'une quelconque des revendications précédentes, ladite couche de nano-antenne plasmonique (170) comprenant un matériau métallique et un nano motif d'une pluralité de trous traversants formés dans le matériau métallique.

15. Appareil optique comprenant le dispositif de modulation optique selon la revendication 1.
